# EUROPÄISCHE PATENTSCHRIFT

(11) **EP 1 625 375 B1**
(45) Veröffentlichungstag und Bekanntmachung des Hinweises auf die Patenterteilung: **29.11.2006**
(21) Anmeldenummer: 04732112.0
(22) Anmeldetag: 11.05.2004
(51) Int. Cl.: G01M 3/28, G01F 23/26, F16J 15/34

(54) **ÜBERWACHUNGSEINRICHTUNG FÜR FLÜSSIGKEITSFÜHRENDE SYSTEME**
MONITORING DEVICE FOR LIQUID-GUIDING SYSTEMS
DISPOSITIF DE SURVEILLANCE POUR DES SYSTEMES D'ACHEMINEMENT DE LIQUIDE

(30) Priorität: 16.05.2003 DE 10322462
(43) Veröffentlichungstag der Anmeldung: 15.02.2006
(73) Patentinhaber: KSB Aktiengesellschaft, 67227 Frankenthal (DE)
(72) Erfinder: KOLLMAR, Dirk, 68542 Heddesheim (DE)
(86) Internationale Anmeldenummer: PCT/EP2004/005011
(87) Internationale Veröffentlichungsnummer: WO 2004/102148

(56) Entgegenhaltungen:
- GB-A- 2 122 356
- US-A- 4 025 846
- US-A1- 2003 015 840

## Beschreibung

Die Erfindung betrifft eine Überwachungseinrichtung für flüssigkeitsführende Systeme, wobei zwischen sich gegeneinander bewegenden Flächen eine Dichtung angeordnet und mit einem Leckage-Sammelmittel (1) verbunden ist, wobei am Leckage-Sammelmittel (1) ein zur Erfassung einer Füllstandshöhe (Fₕ) einer Leckagemenge (2) gestalteter kapazitiver Sensor (5) angeordnet ist, wobei der kapazitive Sensor (5) zur kontinuierlichen Erzeugung von Ausgangssignalen gestaltet ist und am Leckage-Sammelmittel (1) ein rohrförmiger Abfluss für einen kontinuierlichen Abfluss einer Leckagemenge angebracht ist.

Bei solchen Abdichtungen, die in Form von Stopfbuchsen, Gleitringdichtungen und elastischen Dichtungsringen bekannt sind, ist es für den sicheren Betrieb einer damit ausgerüsteten Maschine von Bedeutung, wenn eine sich einstellende oder verändernde Leckage möglichst frühzeitig festgestellt werden kann.

Die Firma Sulzer hat ein bei Gleitringdichtungen Anwendung findendes Überwachungssystem namens SUDIS entwickelt. Dabei werden im Bereich der Gleitringdichtung akustische Emissionen erfasst und mit Hilfe eines Mustererkennungsverfahren analysiert. Wenn im Dichtungsspalt einer Gleitringdichtung Partikel zermahlen werden, dann detektiert dieses System im Dichtungsspalt zermahlene Partikel. Über eine Integration der Anzahl von zermahlenen Partikel und einer direkten Beurteilung der Intensität wird eine Aussage über den Zustand der Gleitringdichtung gemacht. Nachteilig ist hierbei, dass für jede Dichtung bestimmte akustische Klangmuster von einer intakten und einer beschädigten Dichtung notwendig sind. Dies erfordert eine vorherige Simulation eines Dichtungsschadens auf einem Prüfstand, um entsprechende Messwerte für Vergleichsbetrachtungen verwenden zu können. Insgesamt handelt es sich hierbei um eine sehr teure Messtechnik.

Durch die GB 2 122 356 A und die US 2003/0015840 A1 sind gattungsgemäße Überwachungseinrichtungen bekannt. Sie sehen die Verwendung eines hohlzylindrischen Sammelbehälters vor, in dessen senkrecht angeordneten länglichen Innenraums eine zulässige Dichtungsleckage einströmt. Die Bodenflächen der Innenräume ist mit einer festen oder einstellbaren Abflussöffnung versehen, deren Querschnittsöffnung auf die zulässige Leckagemenge einer Dichtung abgestimmt ist. Bei normalen Betriebsbedingungen strömt eine Leckage in den länglichen senkrecht angeordneten Sammelraum ein und fließt daraus ungehindert ab. Bei einem Dichtungsschaden jedoch nimmt die Leckagemenge zu, so dass die Zulaufmenge größer ist als die Abflussmenge, wodurch innerhalb des Innenraumes ein Flüssigkeitsanstieg erfolgt. Überschreitet der Flüssigkeitsspiegel ein vorgegebenes Maß, dann gelangt er in flüssigkeitsberührenden Kontakt mit einem in den Innenraum hinein ragenden Sensor. Aufgrund dieses Kontaktes leitet der Sensor ein Signal an eine Überwachungseinrichtung weiter. Nachteilig bei dieser Lösung ist die Anfälligkeit gegen aggressive und auskristallisierende Flüssigkeiten. Erstere erfordern besonders widerstandsfähige Materialien vom Behälter und von einem in die Flüssigkeit eintauchenden Sensor und Letztere führen zu Verstopfungen im Bereich der Abflussöffnungen und damit zu Fehlalarmen und Betriebsausfällen.

Die US-A 4 025 846 zeigt einen kapazitiven Füllstandssensor. Er besteht aus einem Einschraubelement, welches mit einer rohrförmigen Verlängerung in einen Sammelbehälter hineinragt. Die rohrförmige Verlängerung weist an ihren im Sammelbehälter befindlichen Ende eine abschließende Bodenfläche auf. Auf der Innenseite der Verlängerung liegt an der Bodenfläche ein topfförmiges Metallteil als aktives Sensorelement an. Von diesem metallischen Sensorelement erstreckt sich ein dünner Leitungsdraht zentrisch durch das Innere der rohrförmigen Verlängerung und ist verbunden mit einem vergleichenden Schaltkreis. Weiterhin ist eine mit dem vergleichenden Schaltkreis verbundene Referenzelektrode erforderlich. Diese ist als separates Bauteil im Sensor angeordnet, wenn der Sammelbehälter nicht aus Metall besteht. Besteht diese dagegen aus Metall, dann übernimmt die metallische Behälterwand die Funktion einer Referenzelektrode übernehmen.

Der Innenraum des Füllstandssensors und dessen rohrförmige Verlängerung ist mit Luft gefüllt. Wird der Sammelbehälter mit einem Mittel gefüllt, dann verändert dieses bei Erreichen und Überdecken des Füllstandssensors dessen elektrisches Feld. Aufgrund von im Füllstandssensor vorgegebenen Vergleichswerte wird bei einer entsprechenden äußeren Überdeckung des Füllstandssensors eine Abschaltvorgang für eine Befüllungeinrichtung ausgelöst.

Der Erfindung liegt das Problem zugrunde, für flüssigkeitsführende Systeme eine einfache Überwachungseinrichtung vorzusehen, mit deren Hilfe eventuelle Veränderungen und/oder Zustände an den Dichtungen in einfacher Weise zuverlässig erfasst werden können.

Die Lösung dieses Problems sieht vor, dass das Leckage-Sammelmittel (1) als rinnenartiges, offenes und/oder geschlossenes Rohr ausgebildet ist, dass das Leckage-Sammelmittel (1) ganz oder teilweise aus einem elektrisch nicht leitenden Material besteht und dass der Sensor (5) seitlich aussen an der Wand des Leckage-Sammelmittels (1) angekuppelt ist, so dass er im Verwendungsfall selbst bei kleinsten Leckagemengen im flüssigkeitsführenden Bereich dieser Wand angeordnet ist.

Durch einfache Bewertung der sich im rinnenartigen Leckage-Sammelmittel einstellenden Füllstandshöhe kann eine zuverlässige Aussage über den Betriebszustand der Dichtung getroffen werden. Handelt es sich um eine Dichtung mit einer vorgegebenen zulässigen Leckage, beispielsweise eine Stopfbuchse, dann wird die zulässige Leckagemenge erfasst und deren Änderungen stellen ein verwertbares Signal für Änderungen innerhalb der Dichtung dar. Und bei Gleitringdichtungen kann eine auftretende oder zunehmende Leckagemenge als ein verwertbares Signal für eine Änderung des Dichtungszustandes benutzt werden.

Das Profil kann hierbei als ein offenes und/oder als ein geschlossenes flüssigkeitsführendes Rohr gestaltet sein. Dies ist abhängig von den Eigenschaften einer abzusperrenden Flüssigkeit. Bei gefährlichen Flüssigkeiten wird einem geschlossenen Profil der Vorzug gegeben.

Der am Leckage-Sammelmittel angeordnete kapazitive Sensor, mit dem eine jeweilige Füllstandhöhe zuverlässig erfasst wird, ist als preiswertes Bauteil erhältlich. Wenn dieser Sensor mit einem kontinuierlichen Signalausgang versehen ist, ist eine kontinuierliche Überwachung einer Leckagemenge einer Dichtung gewährleistet.

Um Störungen bei der Messwerterfassung auszuschließen, besteht das Leckage-Sammelmittel ganz oder teilweise aus einem elektrisch nicht leitenden Material, vorzugsweise besteht das Leckage-Sammelmittel aus Kunststoff. Wesentlich ist hierbei die Anordnung eines elektrisch nicht leitenden Materials im Bereich der Sensor-Montagefläche.

Mit einer glattflächigen Ausbildung der rinnenartigen, flüssigkeitsführenden Flächen wird eine Ansammlung oder Anhaftung von irgendwelchen, den Leckagefluss negativ beeinflussenden Fremdkörpern oder Ausscheidungen vermieden.

Um eine problemlose Ankopplung des Sensors an das Leckage-Sammelmittel zu gewährleisten; ist daran seitlich mindestens eine ebene Fläche für eine Sensoraufnahme zur Erfassung der Füllstandshöhe angeordnet.

Die Wandflächen des rinnenartigen Leckage-Sammelmittels begrenzen dessen flüssigkeitsführenden Querschnitt und ein im flüssigkeitsführenden Querschnitt sich ausbildender Flüssigkeitsspiegel weist bei zunehmender Querschnittshöhe eine gleichbleibende oder zunehmende Oberfläche auf. Damit ist eine Aussage über die Füllstandshöhe und über eine Veränderung einer Leckagemenge erhältlich. Ein Wandflächenverlauf, bei dem sich mit verändernder Füllstandshöhe ein gleichbleibender Flüssigkeitsspiegel einstellt, sich also eine nahezu lineare Veränderung ergibt, ist vorteilhaft für Dichtungen nach Art von Packungen, Stopfbuchsen und dergleichen, bei denen größere Leckagemengen üblich sind. Dagegen ist bei Dichtungen nach Art von Gleitringdichtungen, Schwimmringdichtungen und dergleichen mit den geringeren Leckagemengen ein Wandflächenverlauf vorteilhaft, wo eine geringe Menge eine überproportionale Änderung der Füllstandshöhe ergibt.

Im Profilgrund des Leckage-Sammelmittels sammelt sich aufgrund der wirkenden Schwerkraft die Leckagemenge an. Dabei ändert sich die Füllstandhöhe in Abhängigkeit von der Leckagemenge. Diese Änderungen werden vom Sensor messtechnisch erfasst und als ein elektrisches Signal weitergeleitet und entsprechend verarbeitet. Bei einem schrägwinkligen Verlauf der Wandflächen wird im unteren Bereich einer Rinne eine unterproportionale Leckagezunahme erfasst. Diese Maßnahme bedingt bei der Erfassung von nur kleinen Leckagemengen ein verstärktes Sensorsignal.

Durch die Ausbildung des Leckage-Sammelmittels als ein flüssigkeitsführendes Profil mit einer Flächenzunahme über der Querschnittshöhe, ergibt sich ein Rinnenprofil mit einer tiefsten Stelle. Ein solches Profil verfügt, ausgehend von einem Profilgrund oder an der tiefsten Stelle des Profils, über einen Öffnungswinkel α. Ein solcher Öffnungswinkel bestimmt innerhalb der Rinne die Füllstandshöhe einer sich ansammelnden Leckage. Bei Anwendungsfällen, bei denen geringste Leckagemengen als unzulässiger Betriebszustand zu detektieren sind, hat sich ein kleiner Öffnungswinkel des Rinnenprofils als vorteilhaft erwiesen. Dieser verstärkt die Füllstandshöhe einer sich ansammelnden kleinen Leckagemenge. In anderen Anwendungsfällen kann der umgekehrte Fall vorteilhaft sein.

Hierzu sehen Ausgestaltungen sehen vor, dass zwischen zwei flüssigkeitsführenden Wandflächen mit einem Öffnungswinkel ein flüssigkeitsführendes Profil, insbesondere ein Dreiecksprofil oder Vierecksprofil, ausgebildet ist und die Leckagemenge sammelt. Und dass der Öffnungswinkel an einer tiefsten Stelle des rinnenartigen Leckage-Sammelmittels angeordnet ist. Sowie die Anordnung des Sensors im untersten Bereich des sich nach oben erweiterten Querschnitts des rinnenartigen Leckage-Sammelmittels.

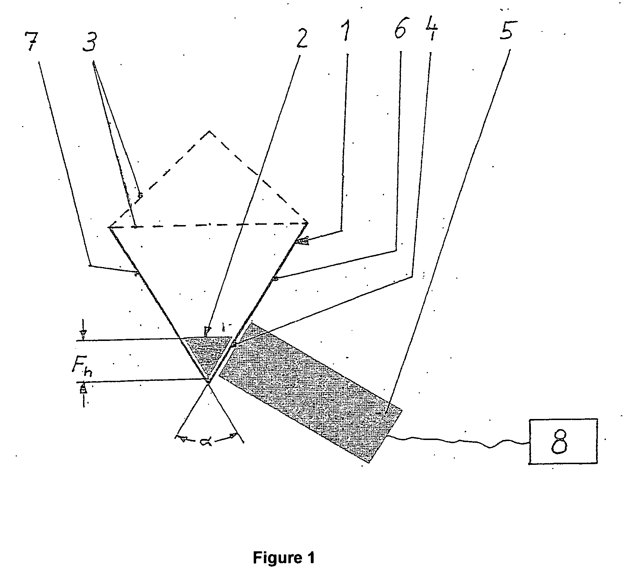

Ein Ausführungsbeispiel der Erfindung ist in der Zeichnung dargestellt und wird im folgenden näher beschrieben,

In der Zeichnung ist ein Querschnitt durch eine Überwachungseinrichtung gezeigt. Ein Leckage-Sammelmittel 1 ist hier als Dreiecksprofil dargestellt, welches nach oben offen ausgebildet ist. Sollte es sich bei einer einstellenden Leckagemenge 2 um ein gefährliches Fluid handeln, dann wird mit Hilfe von den gestrichelt gezeigten Wandflächen 3 das Leckage-Sammelmittel 1 auch in geschlossener Bauform hergestellt. Das Leckage-Sammelmittel 1 ist einer - hier nicht dargestellten - zu überwachenden Dichtung nachgeordnet, steht damit in Wirkverbindung und sammelt durch an sich bekannte Mittel eine aus einer Dichtung austretende Leckagemenge an.

Da solche Leckagemengen im allgemeinen sehr gering sind, weist das Leckage-Sammelmittel 1 eine Formgebung auf, mit deren Hilfe bei geringfügigen Änderungen der Leckagemenge 2 mit dem Sensor 5 eine sichere Detektion einer Mengenänderung gewährleistet ist. Das hier dargestellte Dreieckprofil ist nach Art einer Rinne angeordnet, so dass sich eine Leckagemenge 2 in einem Öffnungswinkel α zwischen zwei Wandflächen 6, 7 ansammelt.

Die Wandfläche 6 des Leckage-Sammelmittel 1 weist eine ebene Fläche 4 auf und daran ist ein Sensor 5 angeordnet, der in vorteilhafter Weise als ein kapazitiver Sensor mit analogem Ausgang ausgebildet ist und mit dessen Hilfe eine Füllstandshöhe Fₕ im Leckage-Sammelmittel 1 erfasst wird. Durch die rinnenartige Ausbildung des Profils des Leckage-Sammelmittels 1 wird erreicht, dass selbst kleinste Leckagemengen 2 für eine ausreichende Füllstandshöhe Fₕ sorgen. Der Sensor 5 befindet sich dabei im untersten Bereich des Leckage-Sammelmittel 1, welches einen sich nach oben erweiterten Querschnitt besitzt. Dieser an der tiefsten Stelle des Leckage-Sammelmittel 1 befindlicher Öffnungswinkel α wird in Abhängigkeit von einer zu erwartenden Leckagemenge gewählt.

Bei einer minimalen Leckagemenge wird nur eine ganz geringe Füllstandshöhe Fₕ vorherrschen. Bei einer stärkeren Leckage steigt dementsprechend die Füllstandshöhe Fₕ einer Leckagemenge 2 an. Mit Hilfe des sich in dem Leckage-Sammelmittel 1 erweiternden Querschnittes wird bei einer sich verändernden Leckagemenge die Füllstandshöhe Fₕ oder auch Querschnittshöhe innerhalb der Rinne überbetont. Bei geringen Leckagemengen 2 wird der Öffnungswinkel α kleiner gewählt und bei größeren Leckagemengen 2 wird der Öffnungswinkel α größer gestaltet.

Das Leckage-Sammelmittel 1 kann als ein kurzes Rohrstück gestaltet sein, beispielsweise ein Dreikant- oder Vierkantrohr, welches mit geeigneten und bekannten Mitteln einer - hier nicht dargestellten - Dichtung nachgeordnet ist. Ein vom Sensor 5 detektiertes Füllstandssignal wird einer Überwachungseinrichtung 8 zugeführt, in der es für Schaltzwecke, Signalfunktionen oder andere bekannte Sicherungs- und Überwachungsmaßnahmen verwendet wird. Als vorteilhaft hat sich herausgestellt, wenn im Bereich des Sensors 5 eine ebene Fläche 4 im Leckage-Sammelmittel 1 vorgesehen ist, um somit eine sichere Ankupplung des Sensors 5 zu gewährleisten.

Der seitlich angeordnete Sensor 5 produziert ein Sensorausgangssignal, das proportional der Wurzel einer Leckagemenge 2 ist. Dies hat zur Folge, dass geringe sich ansammelnde Leckagemengen 2 überbetont werden. Ein solcher Art produziertes Sensorsignal liefert frühzeitig einen Hinweis auf eine Veränderung oder Verschlechterung einer Dichtung, da es bereits bei geringsten Leckagemengen 2 ein deutliches Messsignal liefert. Ein Anwendung findender kapazitiver Sensor 5 weist einen analogen Spannungsausgang mit 4 bis 20 Milliampere Stromstärke auf und ist am Markt preisgünstig erhältlich. Wenn er mit einem kontinuierlichen Signalausgang vesehen ist, ergibt sich dadurch die einfachste Voraussetzung für einen ebensolchen Überwachungssprozess.

Das Leckage-Sammelmittel 1 kann offen oder geschlossen ausgebildet sein, was abhängig ist von der Verdunstungsgeschwindigkeit einer zu überwachenden Leckagemenge. Ebenso ist die Eigenschaft eines überwachenden Mediums ursächlich für die Ausbildung des Leckage-Sammelmittel 1. Bei einem aus Kunststoff hergestellten Leckage-Sammelmittel 1 kann bei dessen Herstellung ein solcher Sensor 5 bereits in einem Arbeitsgang mit eingegossen oder eingespritzt werden.

## Patentansprüche

1. Überwachungseinrichtung für flüssigkeitsführende Systeme, wobei zwischen sich gegeneinander bewegenden Flächen eine Dichtung angeordnet und mit einem Leckage-Sammelmittel (1) verbunden ist wobei am Leckage-Sammelmittel (1) zur ein Erfassung einer Füllstandshöhe (Fₕ) einer Leckagemenge (2) gestalteter kapazitiver Sensor (5) angeordnet ist, wobei der kapazitive Sensor (5) zur kontinuierlichen Erzeugung von Ausgangssignalen gestaltet ist und am Leckage-Sammelmittel (1) ein rohrförmiger Abfluss für einen kontinuierlichen Abfluss einer Leckagemenge angebracht ist, **dadurch gekennzeichnet, dass** das Leckage-Sammelmittel (1) als rinnenartiges und offenes oder geschlossenes Rohr ausgebildet ist, dass das Leckage-Sammelmittel (1) ganz oder teilweise aus einem elektrisch nicht leitenden Material besteht und dass der Sensor (5) seitlich aussen an der Wand des Leckage-Sammelmittels (1) angekuppelt ist, so dass er im Verwendungsfall selbst bei kleinsten Leckagemengen im flüssigkeitsführenden Bereich dieser Wand angeordnet ist.

2. Überwachungseinrichtung nach Anspruch 1, **dadurch gekennzeichnet, dass** das rinnenartige Leckage-Sammelmittel (1) aus Kunststoff besteht.

3. Überwachungseinrichtung nach Anspruch 1 oder 2, **dadurch gekennzeichnet, dass** das rinnenartige Leckage-Sammelmittel (1) gegenüber einer Horizontalen mit einer geringen Neigung angeordnet ist.

4. Überwachungseinrichtung nach Anspruch 1, 2 oder 3, **dadurch gekennzeichnet, dass** am rinnenartigen Leckage-Sammelmittel (1) die flüssigkeitsführenden Flächen glattflächig ausgebildet sind und seitlich am Leckage-Sammelmittel (1) mindestens eine ebene Fläche (4) für eine Sensoraufnahme angeordnet ist.

5. Überwachungseinrichtung nach einem der Ansprüche 1 bis 4, **dadurch gekennzeichnet, dass** Wandflächen (6, 7) des rinnenartigen Leckage-Sammelmittels (1) dessen flüssigkeitsführenden. Querschnitt begrenzen und dass ein im flüssigkeitsführenden Querschnitt sich im Verwendungsfall ausbildender Füssigkeitsspiegel bei zunehmender Querschnittshöhe (Fₕ) eine gleichbleibende oder zunehmende Oberfläche aufweist.

6. Überwachungseinrichtung nach Anspruch 5, **dadurch gekennzeichnet, dass** zwischen zwei flüssigkeitsführenden Wandflächen (6, 7) mit einem Öffnungswinkel (α) ein flüssigkeitsführendes Profil, insbesondere ein Dreiecksprofil oder Vierecksprofil, ausgebildet ist und die Leckagemenge sammelt.

7. Überwachungseinrichtung nach Anspruch 5 oder 6, **dadurch gekennzeichnet, dass** der Öffnungswinkel (α) an einer tiefsten Stelle des rinnenartigen Leckage-Sammelmittels (1) angeordnet ist.

8. Überwachungseinrichtung nach einem der Ansprüche 1 bis 7, **dadurch gekennzeichnet, dass** der Sensor (5) im untersten Bereich des sich nach oben erweiterten Querschnitts von dem rinnenartigen Leckage-Sammelmittel (1) angeordnet ist.

## Claims

1. Monitoring device for liquid-bearing systems, with a seal being arranged between areas which move in relation to one another and being connected to a leakage collection means (1), with a capacitive sensor (5), which is designed to detect the filling height (Fₕ) of a leakage quantity (2), being arranged on the leakage collection means (1), with the capacitive sensor (5) being designed to continuously generate output signals and a pipe-like outflow for a continuous outflow of a leakage quantity being fitted to the leakage collection means (1), **characterized in that** the leakage collection means (1) is in the form of a channel-like and open or closed pipe, **in that** the leakage collection means (1) is entirely or partly composed of an electrically non-conductive material, and **in that** the sensor (5) is coupled laterally to the outside of the wall of the leakage collection means (1), so that, in the case of use, it is arranged in the liquid-bearing region of this wall even in the case of extremely small leakage quantities.

2. Monitoring device according to Claim 1, **characterized in that** the channel-like leakage collection means (1) is composed of plastic.

3. Monitoring device according to Claim 1 or 2, **characterized in that** the channel-like leakage collection means (1) is arranged with a slight inclination in relation to a horizontal.

4. Monitoring device according to Claim 1, 2 or 3, **characterized in that** the liquid-bearing areas on the channel-like leakage collection means (1) are smooth, and at least one flat area (4) for a sensor holder is arranged on the side of the leakage collection means (1).

5. Monitoring device according to one of Claims 1 to 4, **characterized in that** wall areas (6, 7) of the channel-like leakage collection means (1) bound the liquid-bearing cross section of the latter, and **in that** a liquid level which forms in the liquid-bearing cross section in the case of use has a constant or increasing surface as the cross-sectional height (Fₕ) increases.

6. Monitoring device according to Claim 5, **characterized in that** a liquid-bearing profile, in particular a triangular profile or a rectangular profile, is formed between two liquid-bearing wall areas (6, 7) with an opening angle (α), and collects the leakage quantity.

7. Monitoring device according to Claim 5 or 6, **characterized in that** the opening angle (α) is arranged at the deepest point in the channel-like leakage collection means (1).

8. Monitoring device according to one of Claims 1 to 7, **characterized in that** the sensor (5) is arranged in the lowest region of the cross section of the channel-like leakage collection means (1), which cross section widens in the upward direction.

## Revendications

1. Dispositif de surveillance pour des systèmes d'acheminement de liquide, une garniture d'étanchéité étant disposée entre deux surfaces mobiles l'une par rapport à l'autre et étant reliée à un collecteur de fuite (1), un capteur capacitif (5) configuré pour détecter un niveau de remplissage (Fₕ) d'un volume de fuite (2) étant monté sur le collecteur de fuite (1), le capteur capacitif (5) étant configuré pour générer continuellement des signaux de sortie et un écoulement tubulaire pour un écoulement continu d'un volume de fuite étant monté sur le collecteur de fuite (1), **caractérisé en ce que** le collecteur de fuite (1) est réalisé sous la forme d'une rigole et d'un tube ouvert ou fermé, **en ce que** le collecteur de fuite (1) est constitué entièrement ou partiellement d'un matériau non conducteur d'électricité et **en ce que** le capteur (5) est accouplé latéralement à l'extérieur à la paroi du collecteur de fuite (1) de sorte que lors de l'utilisation, il soit disposé dans la zone de cette paroi conduisant le liquide, et ce même en présence de très petits volumes de fuite.

2. Dispositif de surveillance selon la revendication 1, **caractérisé en ce que** le collecteur de fuite (1) de type rigole est en matière plastique.

3. Dispositif de surveillance selon la revendication 1 ou 2, **caractérisé en ce que** le collecteur de fuite (1) de type rigole est disposé avec une faible inclinaison par rapport à l'horizontale.

4. Dispositif de surveillance selon la revendication 1, 2 ou 3, **caractérisé en ce que** sur le collecteur de fuite (1) de type rigole, les surfaces conduisant le liquide sont lisses et au moins une surface plane (4) pour recevoir un capteur est disposée latéralement sur le collecteur de fuite (1).

5. Dispositif de surveillance selon l'une quelconque des revendications 1 à 4, **caractérisé en ce que** les surfaces des parois (6, 7) du collecteur de fuite (1) de type rigole délimitent sa section transversale conduisant le liquide et **en ce qu'**un niveau de liquide qui se forme lors de l'utilisation dans la section transversale conduisant le liquide présente une surface constante ou croissante lorsque la hauteur de la section transversale (Fₕ) augmente.

6. Dispositif de surveillance selon la revendication 5, **caractérisé en ce qu'**un profilé conduisant le liquide, notamment un profilé triangulaire ou un profilé rectangulaire, est réalisé entre deux surfaces de paroi (6, 7) conduisant le liquide avec un angle d'ouverture (α) et collecte le volume de fuite.

7. Dispositif de surveillance selon la revendication 5 ou 6, **caractérisé en ce que** l'angle d'ouverture (α) est disposé au point le plus bas du collecteur de fuite (1) de type rigole.

8. Dispositif de surveillance selon l'une quelconque des revendications 1 à 7, **caractérisé en ce que** le capteur (5) est disposé dans la zone la plus basse de la section transversale s'élargissant vers le haut du collecteur de fuite (1) de type rigole.
